# EUROPÄISCHE PATENTSCHRIFT

(11) **EP 1 550 511 B1**
(45) Veröffentlichungstag und Bekanntmachung des Hinweises auf die Patenterteilung: **29.11.2006**
(21) Anmeldenummer: 05007516.7
(22) Anmeldetag: 31.01.2002
(51) Int. Cl.: B05B 7/04, B05B 7/12, B23Q 11/10, F16N 7/32

(54) **Vorrichtung und Verfahren zur Aerosolerzeugung**
Device and method for producing an aerosol
Dispositif et procédé de production d'un aérosol

(30) Priorität: 31.01.2001 DE 10104012
(43) Veröffentlichungstag der Anmeldung: 06.07.2005
(62) Teilanmeldung aus: 02718070.2
(73) Patentinhaber: Willy Vogel AG, 12277 Berlin (DE)
(72) Erfinder: Kälberer, German, 73277 Owen/Teck (DE)
(74) Vertreter: Grünecker, Kinkeldey, Stockmair & Schwanhäusser Anwaltssozietät

(56) Entgegenhaltungen:
- BE-A- 558 653
- DE-A- 19 654 321
- DE-A- 19 721 650
- DE-U- 9 205 639

## Beschreibung

Die Erfindung betrifft eine Vorrichtung zur Aerosolerzeugung gemäß dem Oberbegriff des Anspruchs 1, wie offenbart in BE 558 653.

Die Erfindung betrifft außerdem ein Verfahren zum Erzeugen eines Aerosols.

Aus der DE 197 216 50 A1 ist ein Aerosolerzeuger bekannt, bei dem Durchflusssteuerventile vorgesehen sind, mit denen die Menge des Trägergases und/oder die Menge der Flüssigkeit, die jeweils den Injektorvorrichtungen zugeführt sind, getrennt einstellbar sind.

Die Minimalmengenschmiervorrichtung der DE 199 172 19 A1 weist ein Dosierteil mit zwei Dosierpumpen auf, deren Förderleistung über Verstellungen regulierbar ist. Durch die beiden Dosierpumpen wird Öl aus einem Vorratsgefäß gefördert. Außerdem ist ein Nadelventil in der Druckluftversorgungsleitung als Teil der Dosiervorrichtung vorgesehen.

In der DE 196 153 79 ist eine pneumatische Handspritzpistole mit automatischer Spritzstrahlverstellung zum Einsatz beispielsweise in Lackierereien beschrieben. In externen Zuführungen von mindestens Hornluft und/oder zu applizierendem Medium sind mittels einer Steuereinheit steuerbare Vorrichtungen angeordnet, über welche die Auftragsmenge beeinflussbar ist.

Aus der DE 92 05 369.3 ist eine Vorrichtung zum dosierten Versprühen, insbesondere von Klebstoff, bekannt. Bei dieser Vorrichtung wird die Flüssigkeit durch Druckluft in einer Venturidüse aus einem Vorratsbehälter angesaugt, wobei die Haftklebermenge stufenlos eingestellt werden kann.

Bei der Vorrichtung der WO 98/10217 wird die für die Zerstäubung des Kühlschmiermittels angesaugte Kühlschmiermittelmenge mit Hilfe eines Ventils gesteuert. Dabei kann der Volumenstrom des der Zerstäubung zugeführten flüssigen Kühlschmiermittels und der Volumenstrom der Druckluft über ein Druckminderventil variiert werden.

Eine weitere Vernebelungseinrichtung ist aus der EP 0 941 769 A1 bekannt.

Schließlich ist in der nachveröffentlichten EP 1 106 902 A1 eine Vernebelungsvorrichtung beschrieben, bei der lediglich der Behälterdruck in Abhängigkeit vom Versorgungsdruck, aber nicht die Menge der Flüssigkeit und/oder des Trägergases steuerbar ist.

Eine gattungsgemäße Vorrichtung ist aus der DE 196 543 21 A1 bekannt. Die hiermit erzeugten Aerosole sind bei Inhalatoren in der Medizintechnik, Luftbefeuchtern in der Haushaltstechnik und insbesondere für die Kühlung und Schmierung von Werkzeugen oder Werkstücken einsetzbar.

Die Vorrichtung umfasst eine in einem Druckbehälter angeordnete Injektorvorrichtung zur Erzeugung eines Aerosols aus einer Flüssigkeit und einem Trägergas. Die ein Schmiermittel bildende Flüssigkeit, vorzugsweise Öl, wird mittels eines Unterdrucks angesaugt und in einem Strahl des Trägergases, vorzugsweise Luft, zerstäubt. Das Trägergas wird unter Druck in eine Kammer der Injektorvorrichtung eingeleitet, wobei sich infolge der Querschnittsvergrößerung ein Unterdruck einstellt, der die Flüssigkeit aus ihrer ebenfalls in die Kammer mündenden Leitung fördert und dem Trägergasstrom hohe Geschwindigkeit zuführt. Die Flüssigkeit wird mit dem Trägergasstrom mitgerissen und schlägt sich fein verteilt auf der strukturierten Oberfläche eines Prallkörpers nieder. An der Oberfläche des Prallkörpers erfolgt eine Zerstäubung des Flüssigkeitsfilms in ein Aerosol geringer Partikelgröße.

In dem Deckel des Druckbehälters ist eine einen Aerosolabgang bildende Anschlussleitung vorgesehen, über welche Aerosol aus dem Druckbehälter entnommen wird, um sie wenigstens einem Werkzeug oder Werkstück zur Kühlung und zur Schmierung zuzuführen.

Die Zuführung der Flüssigkeit und des Trägergases zur Injektorvorrichtung erfolgt jeweils über eine Leitung, in welcher ein Steuerventil vorgesehen ist. Über die Steuerventile erfolgt eine Druckregelung, sowohl bei der Zuführung der Flüssigkeit als auch bei der Zuführung des Trägergases.

Mit der so ausgebildeten Vorrichtung ist eine kontinuierliche Aerosolerzeugung gewährleistet, solange über den Aerosolabgang eine hinreichend große Menge an Aerosol aus dem Druckbehälter gefördert wird. Dies ist dann der Fall, wenn die am Aerosolabgang angeschlossenen Werkzeuge wenigstens einen Mindestdurchmesser aufweisen, der typischerweise bei 10 mm liegt.

Bei kleineren Werkzeugdurchmessern ist die Entnahmemenge des Aerosols pro Zeiteinheit so gering, dass der Behälterdruck im Innern des Druckbehälters kontinuierlich ansteigt, wobei der Behälterdruck sich asymptotisch dem Versorgungsdruck, mit welchem das Trägergas über eine externe Trägergasversorgung der Injektorvorrichtung zugeführt wird, nähert.

Dieser Druckanstieg kann über die Druckregelung an den Steuerventilen nicht verhindert werden. Insbesondere über das Steuerventil für die Trägergaszufuhr kann eine Druckregelung nicht mehr durchgeführt werden, da der Versorgungsdruck für das Trägergas entsprechend der Ausbildung der externen Trägergasversorgung fest vorgegeben ist.

Damit wird unabhängig von der Druckregelung durch das Steuerventil zur Flüssigkeitszufuhr der Differenzdruck zwischen Versorgungsdruck und Behälterdruck so gering, dass die Strömungsgeschwindigkeit des der Injektorvorrichtung zugeführten Trägergases nicht mehr groß genug ist, um Flüssigkeit anzusaugen. Damit wird nur noch Trägergas ohne Flüssigkeit der Injektorvorrichtung zugeführt, so dass die Aerosolerzeugung abreißt.

Um in derartigen Fällen eine Aerosolerzeugung aufrecht zu erhalten, ist bei bekannten Vorrichtungen in den Druckbehältern ein Bypass eingebaut. Über den Bypass wird bei einer unzulässigen Druckerhöhung im Druckbehälter Aerosol ausgeleitet, wodurch der Behälterdruck wieder sinkt.

Abgesehen davon, dass das aus dem Druckbehälter ausgeleitete Aerosol zur Werkzeugschmierung nicht mehr zur Verfügung steht und sich die Ausbeute der Aerosolerzeugung unerwünscht verringert, erfordert ein derartiger Bypass nachgeordnete Vorrichtungen zum Auffangen und Entsorgen des ausgeleiteten Aerosols. Dadurch wird der konstruktive Aufwand der Vorrichtung zur Aerosolerzeugung unerwünscht erhöht.

Der Erfindung liegt die Aufgabe zugrunde, eine Vorrichtung der eingangs genannten Art so auszubilden, dass für ein möglichst breites Spektrum von Aerosolentnahmemengen eine zuverlässige Aerosolerzeugung gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sowie ein die obige Aufgabe ebenfalls lösendes Verfahren sind in den weiteren Ansprüchen beschrieben.

Die erfindungsgemäße Vorrichtung zur Aerosolerzeugung weist eine Injektorvorrichtung auf. In der Injektorvorrichtung wird aus einem Trägergas und einer Flüssigkeit ein Aerosol erzeugt. Das Trägergas und die Flüssigkeit ist der Injektorvorrichtung jeweils über wenigstens eine Drossel eines Drosselsystems mengengesteuert zugeführt.

Durch die erfindungsgemäße mengengesteuerte Zufuhr von Trägergas und Flüssigkeit in die Injektorvorrichtung wird eine gleichermaßen zuverlässige Aerosolerzeugung sowohl bei geringen als auch bei großen Aerosolentnahmemengen erhalten. Dabei ist besonders vorteilhaft, dass in dem gesamten Bereich der Aerosolabnahmemengen der Anteil an Trägergas und Flüssigkeit im Aerosol gezielt und reproduzierbar vorgebbar ist.

Dieser Vorteil beruht im Wesentlichen darauf, dass die mengengesteuerte Zuführung von Trägergas und Flüssigkeit in die Injektorvorrichtung an den Aerosolentnahmeprozess optimal angepasst ist.

Die mit Aerosol versorgten Einheiten, insbesondere Werkzeuge, sind über wenigstens einen Aerosolabgang an die Vorrichtung angeschlossen. Der Anschluss eines Werkzeuges an einen Aerosolabgang weist einen effektiven Aerosolabnahmequerschnitt auf, über welchen je nach Ausbildung und Betriebsart des Werkzeugs ein bestimmter Volumenstrom von Aerosol zugeführt wird. Damit bildet das Werkzeug selbst eine Drossel, über welche ein bestimmter Volumenstrom an Aerosol gefördert wird.

Der Grundgedanke der Erfindung besteht darin, mittels einer Mengensteuerung über das Drosselsystem die Volumenströme des Trägergases und der Flüssigkeit, welche in die Injektorvorrichtung eingeleitet werden, an die Aerosolentnahmemengen anzupassen. Dabei erfolgt weder eine Regelung des Druckes des Trägergases noch des Druckes der Flüssigkeit. Vielmehr erfolgt am Drosselsystem eine dynamische Druckänderung bei der Trägergaszufuhr und der Flüssigkeitszufuhr.

Diese dynamische Druckänderung wirkt stabilisierend auf die Aerosolerzeugung sowie die Versorgung des angeschlossenen Werkzeugs. Insbesondere erfolgt eine Selbststabilisierung der Aerosolerzeugung und Aerosolversorgung bei zeitlich veränderlichen Aerosolentnahmemengen.

Ist beispielsweise an den Aerosolabgang als Werkzeug ein zu kühlender und zu schmierender Bohrer angeschlossen, so wird über den Aerosolabgang eine konstante Menge an Aerosol gefördert, solange dessen Betriebszustand unverändert bleibt. Entsprechend werden über das Drosselsystem bestimmte Volumenströme an Trägergas und Flüssigkeit gefördert. Ändert sich der Betriebszustand des Bohrers, beispielsweise dadurch, dass dieser in ein Werkstück eindringt, so verringert sich der Aerosolabnahmequerschnitt, so dass eine geringere Menge an Aerosol dem Werkzeug zugeführt wird. Da die Zufuhr von Flüssigkeit und Trägergas zur Injektorvorrichtung nicht druckgeregelt, sondern mengengesteuert erfolgt, erhöht sich der Aerosoldruck vor dem Aerosolabgang, wodurch wieder ein größerer Volumenstrom an Aerosol dem Werkzeug zugeführt wird, was wiederum zu einer Druckstabilisierung im Innern der Vorrichtung zur Aerosolerzeugung führt.

In einer vorteilhaften Ausführungsform erfolgt die Mengensteuerung in Abhängigkeit einer Differenzdrucküberwachung mit einem Sensor, welcher die Druckdifferenz ΔP zwischen dem Versorgungsdruck P_{V}, mit welchem das Trägergas der Injektorvorrichtung zugeführt wird, und dem Behälterdruck P_{B} in dem Druckbehälter, in welchem die Injektorvorrichtung angeordnet ist, misst.

Liegt der Differenzdruck ΔP oberhalb eines ersten Grenzwerts ΔP₀, so werden mit einer vorgegebenen Einstellung des Drosselsystems entsprechende Volumenströme von Trägergas und Flüssigkeit der Injektorvorrichtung zugeführt. Sinkt der Differenzdruck ΔP ab, so dass dieser unterhalb von ΔP₀ liegt, so wird das Drosselsystem geschlossen und eine Aerosolerzeugung unterbunden. Die Aerosolerzeugung wird erst dann wieder aufgenommen, wenn der Differenzdruck einen weiteren Grenzwert ΔP₁, der oberhalb von ΔP₀ liegt, überschreitet. Die Differenz zwischen ΔP₁ und ΔP₀ bildet eine Schalthysterese.

Diese verhindert unnötige Schaltvorgänge und führt so zu einer Stabilisierung der Aerosolerzeugung.

Durch diese Steuerung wird eine langzeitstabile Aerosolerzeugung sowohl für sehr kleine als auch sehr große Aerosolentnahmemengen erhalten. Dementsprechend können an den Aerosolabgängen sowohl Werkzeuge mit großen als auch kleinen Aerosolabnahmequerschnitten angeschlossen werden. Dabei können insbesondere auch Werkzeuge mit Werkzeugdurchmessern von unter 1,5 mm, welche beispielsweise beim Tieflochbohren eingesetzt werden, zuverlässig mit Aerosol versorgt werden. Hierbei ist insbesondere ausgeschlossen, dass in dem Druckbehälter Druckverhältnisse herrschen, die eine Aerosolerzeugung unmöglich machen.

Besonders vorteilhaft ist weiterhin, dass die Volumenströme des Trägergases und der Flüssigkeit über eine fest vorgegebene Einstellung des Drosselsystems vorgebbar sind und während des Betriebs der Vorrichtung nicht geändert werden müssen.

In einer vorteilhaften Ausführungsform der Erfindung erfolgt die Steuerung der Vorrichtung und insbesondere die Einstellung des Drosselsystems zentral über eine Steuereinheit.

Das Drosselsystem umfasst in einer Ausgestaltung dabei von der Steuereinheit gesteuerte Blendenanordnungen mit jeweils einer vorgegebenen Anzahl von Blendenöffnungen, die über die Steuereinheit selektiv geöffnet oder geschlossen werden können.

Dabei ist wenigstens eine Düse mit einer Blendenanordnung zur Zufuhr von Trägergas und wenigstens eine weitere Düse mit einer weiteren Blendenanordnung zur Zufuhr von Flüssigkeit vorgesehen.

Ein weiterer wesentlicher Vorteil der erfindungsgemäßen Vorrichtung besteht darin, dass mit dieser Aerosol in vorgegebenen Zeitintervallen entnommen werden kann, ohne dass dadurch die Vorrichtung in einen instabilen Zustand gerät.

Derartige Betriebsarten sind beispielsweise zur Kühlung und Schmierung von Bohrern notwendig, welchen in vorgegebenen Zeitintervallen Aerosol zugeführt werden muss.

Hierzu ist am Aerosolabgang ein Verschlussmittel angeordnet, welches beispielsweise von einem gesteuerten Kugelhahn gebildet ist. Durch eine entsprechende Ansteuerung des Kugelhahns kann die Aerosolabnahme abrupt gestartet oder beendet werden.

Durch diesen Intervallbetrieb ändern sich die Druckverhältnisse im Druckbehälter. Eine druckgeregelte Zufuhr von Trägergas und Flüssigkeit wäre durch die systembedingten Regelzeiten zu träge, um diesen Änderungen zu folgen. Dagegen erfolgt bei der erfindungsgemäßen Vorrichtung keinerlei Druckregelung, so dass auch bei Schließen des Kugelhahns das Aerosol mit unveränderten Parametern des Drosselsystems weiter erzeugt wird. Das so auf Vorrat erzeugte Aerosol kann bei Öffnen des Kugelhahns schlagartig austreten und steht damit dem Werkzeug unmittelbar zur Verfügung.

Die Erfindung wird im Nachstehenden anhand der Zeichnungen erläutert. Es zeigen:
- Fig. 1:: Blockschaltbild eines Ausführungsbeispiels der erfindungsgemäßen Vorrichtung zur Aerosolerzeugung.
- Fig. 2:: Detaildarstellung eines Ausschnitts eines zweiten Ausführungsbeispiels einer Vorrichtung zur Aerosolerzeugung.
- Fig. 3:: Ausführungsbeispiel einer Blendenanordnung für die Vorrichtung gemäß Fig. 1.

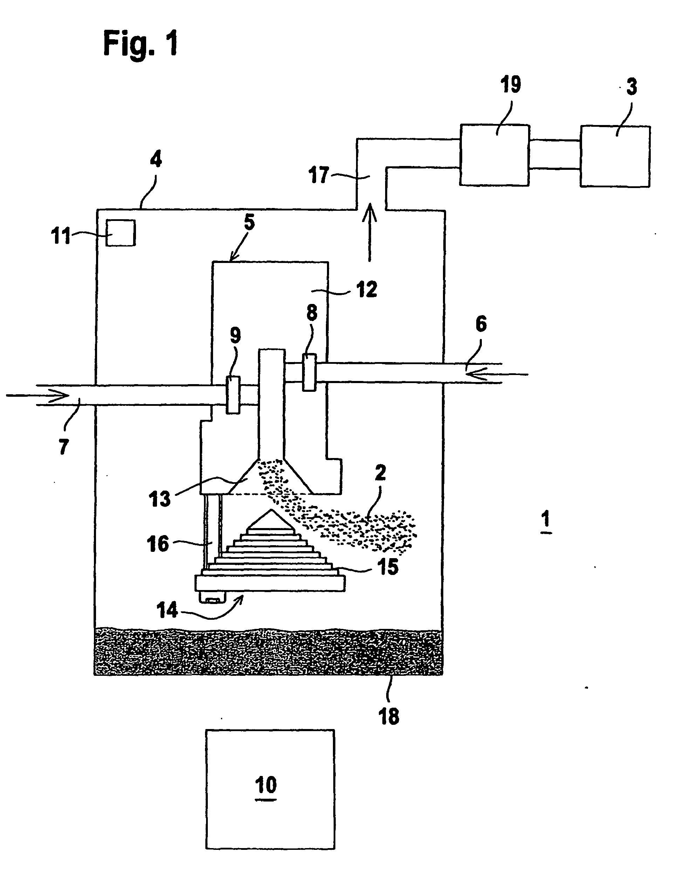

Fig. 1 zeigt schematisch den prinzipiellen Aufbau einer Vorrichtung 1 zur Aerosolerzeugung. Das mittels der Vorrichtung 1 erzeugte Aerosol 2 wird im vorliegenden Beispiel zur Kühlung und Schmierung von Werkzeugen 3, Werkstücken sowie Getrieben und Maschinen eingesetzt. Prinzipiell können derartige Vorrichtungen 1 auch zur Erzeugung von Aerosolen 2 für Inhalatoren in der Medizintechnik, Luftbefeuchtern in der Haushaltstechnik und dergleichen eingesetzt werden.

Die Vorrichtung gemäß Fig. 1 umfasst einen Druckbehälter 4, in welchem eine Injektorvorrichtung 5 angeordnet ist. Der Injektorvorrichtung 5 wird über eine erste Leitung 6 Trägergas und eine zweite Leitung 7 eine Flüssigkeit zugeführt. Das Trägergas besteht aus Luft und wird über eine nicht dargestellte Druckluftversorgung mit einem Versorgungsdruck P_{V} bereitgestellt, der typischerweise im Bereich 6 bar ≤ P_{V} ≤ 10 bar liegt. Die Flüssigkeit dient als Schmiermittel und ist im vorliegenden Ausführungsbeispiel von Öl gebildet, das über ein Ölreservoir in die Leitung 7 eingespeist wird. Alternativ können auch synthetische Ester oder dergleichen eingesetzt werden.

Sowohl die Luft als auch das Öl werden jeweils über eine Drossel 8, 9 der Injektorvorrichtung 5 zugeführt. Die ein Drosselsystem bildenden Drosseln 8, 9 werden über eine Steuereinheit 10 gesteuert. Die Steuereinheit 10 ist von einem elektrischen Schaltkreis oder dergleichen gebildet. Neben den Drosseln 8, 9 ist über nicht dargestellte Zuleitungen ein Sensor 11 an die Steuereinheit 10 angeschlossen. Der als Differenzdrucksensor ausgebildete Sensor 11 misst den Differenzdruck ΔP = P_{V} - P_{B}, wobei P_{B} der Druck ist, welcher im Innenraum des Druckbehälters 4 herrscht.

Die Injektorvorrichtung 5 weist einen Injektorblock 12 auf, in welchem eine Injektorkammer 13 angeordnet ist. Die Injektorkammer 13 ist im Bereich ihres Auslasses zum unteren Ende hin verbreitert. Unterhalb des Auslasses ist ein kegelförmiger Prallkörper 14 angeordnet, dessen Mantelfläche eine Treppenstruktur mit einer Vielzahl aufeinander folgenden Stufen 15 aufweist.

Über eine Halterung 16 ist der Prallkörper 14 in vorgegebenem Abstand zum Auslass der Injektorkammer 13 angeordnet, wobei dieser Abstand vorzugsweise einstellbar ist.

Über die Drosseln 8, 9 wird Luft und Öl in die Injektorkammer 13 eingeführt, wobei bei Eintritt in die Injektorkammer 13 infolge der Querschnittsvergrößerung ein Unterdruck entsteht, durch welchen Öl angesaugt wird und sich mit der Druckluft vermischt. Der so erhaltene Gasstrahl mit darin enthaltenen Flüssigkeitströpfchen wird auf den Prallkörper 14 geführt, auf welchen sich zunächst Flüssigkeitströpfchen absetzen. Die mit hoher Geschwindigkeit nachströmende Luft des Gasstrahls mit weiteren Flüssigkeitströpfchen führt beim Aufprall dieser Tröpfchen zur Bildung feinster Tröpfchen des Öls, so dass sich ein Aerosol 2 mit sehr feinen Ölpartikeln bildet.

Das Aerosol 2 mit den feinen Ölpartikeln wird seitlich abgelenkt und über einen Aerosolabgang 17, der im vorliegenden Beispiel an der Decke des Druckbehälters 4 angeordnet ist, aus diesem ausgeführt und einem Werkzeug 3 zugeführt. Prinzipiell können auch mehrere Aerosolabgänge 17 zum Anschluss einer vorgegebenen Anzahl von Werkzeugen 3 vorgesehen sein.

Die schweren Ölpartikel sinken auf den Boden des Druckbehälters 4 ab, in welchem ein Ölvorrat 18 angeordnet ist, der vorteilhaft als Öl zur Aerosolerzeugung verwendet wird.

Um eine Größenselektion der Öltröpfchen im Aerosol 2 zu erhalten, können im Bereich vor dem Aerosolabgang 17 nicht dargestellte Käfigstrukturen angeordnet sein, welche eine annähernd rechtwinklige Umlenkung des Aerosolstromes erzwingen. Größere Öltropfen können dieser Umlenkung nicht folgen, so dass nur kleinste Öltröpfchen im Aerosolstrom über den Aerosolabgang 17 aus dem Druckbehälter 4 geführt werden.

Zudem kann eine weitere, nicht dargestellte Düse zur Einspeisung von Zusatzluft vorgesehen sein.

Zwischen Aerosolabgang 17 und Werkzeug 3 ist ein von einer externen Steuerung gesteuertes Verschlussmittel 19 vorgesehen. Das Verschlussmittel 19 ist vorzugsweise von einem druckluftgesteuerten Kugelhahn gebildet. Dieser kann über die Steuerung mit kurzen Ansprechzeiten geschlossen und geöffnet werden, so dass dadurch die Zufuhr von Aerosol 2 zum Werkzeug 3 abrupt aktiviert und deaktiviert werden kann.

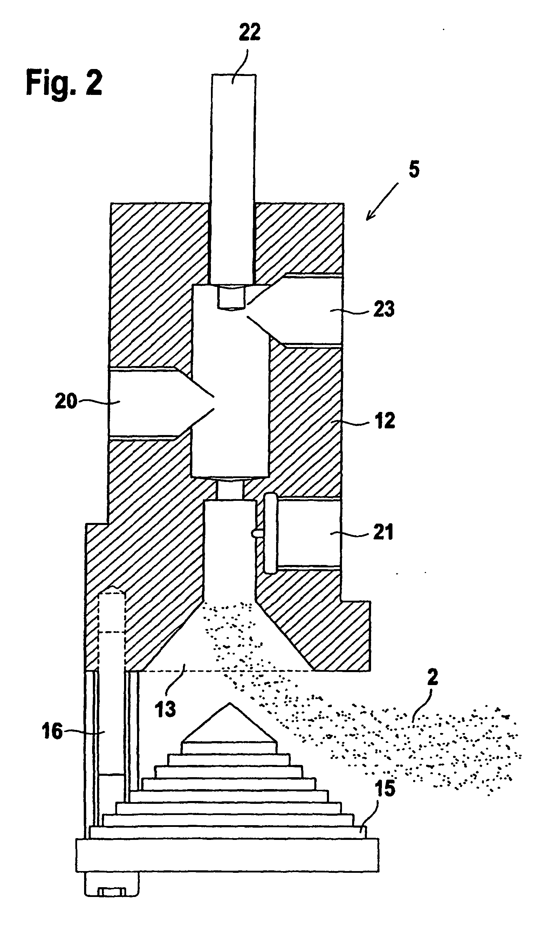

Fig. 2 zeigt ein Ausführungsbeispiel einer Injektorvorrichtung 5, welche im Wesentlichen dem Ausführungsbeispiel gemäß Fig. 1 entspricht. Insbesondere weist die Injektorvorrichtung 5 wieder eine Injektorkammer 13 auf, die in Abstand dem Prallkörper 14 gegenüberliegt, wobei der Prallkörper 14 mittels der Halterung 16 in vorgegebenem Abstand zur Injektorkammer 13 fixiert ist.

Im Unterschied zu dem Ausführungsbeispiel gemäß Fig. 1 sind bei der Anordnung gemäß Fig. 2 zwei Düsensätze mit jeweils zwei Düsen 20, 21, 22, 23 vorgesehen, welche zur Einspeisung von Luft und Öl in die Injektorvorrichtung 5 dienen.

Der erste Düsensatz weist zwei dicht an die Injektorkammer 13 angrenzende Düsen 20, 21 auf, wobei über die erste Düse 20 Luft und über die zweite Düse 21 Öl in die Injektorkammer 13 geleitet wird.

Der zweite Düsensatz liegt oberhalb des ersten Düsensatzes und weist ebenfalls eine Düse 22 zur Einspeisung von Luft und eine zweite Düse 23 zur Einspeisung von Öl auf.

Die Zufuhr von Öl und Luft über die verschiedenen Düsen erfolgt mengengesteuert über jeweils eine in Fig. 2 nicht dargestellte Drossel 8, 9, wobei die Drosseln 8, 9 das Drosselsystem bilden.

Die Steuerung des Drosselsystems und der Zufuhr von Öl und Luft in die Injektorvorrichtung 5 erfolgt wiederum über die Steuereinheit 10.

Je nachdem wie groß der Ölbedarf zur Aerosolerzeugung ist, wird vorzugsweise entweder nur über das erste Düsensystem oder über beide Düsensysteme Öl und Luft in die Injektorvorrichtung 5 geleitet. Mittels der Zusatzdüse 22 kann die Luftzufuhr weiter eingestellt werden.

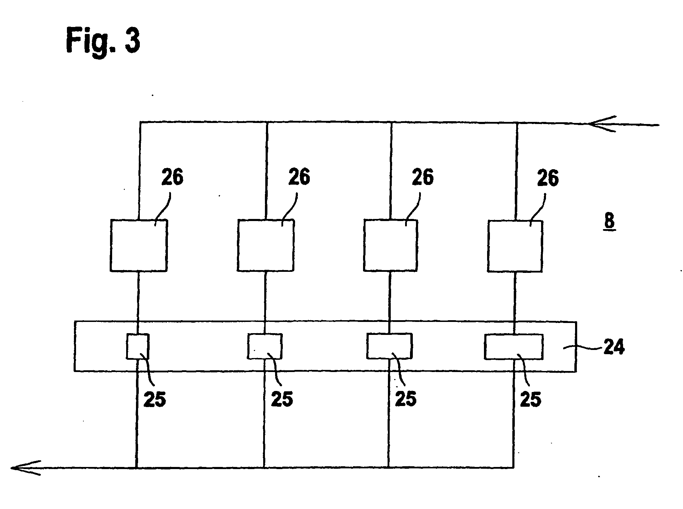

Die Drosseln 8, 9 des Drosselsystems sind in Form von Blendenanordnungen ausgebildet. Ein Ausführungsbeispiel einer derartigen als Blendenanordnung ausgebildeten Drossel 8 zur Luftzufuhr ist in Fig. 3 dargestellt. Eine derartige Blendenanordnung kann unabhängig von der Verwendung einer Differenzdrucksteuerung im Aerosolerzeuger eingesetzt werden.

Die Blendenanordnung umfasst einen Blendenkörper 24, in welchem in Abstand nebeneinander liegend eine vorgegebene Anzahl von Blendenöffnungen 25 eingearbeitet ist. Die Blendenöffnungen 25 weisen jeweils einen kreisförmigen Querschnitt auf. Die Durchmesser der Blendenöffnungen 25 sind vorzugsweise jeweils unterschiedlich ausgebildet und liegen im Bereich von unter einem Millimeter bis zu einigen Millimetern. Die in Fig. 3 dargestellte Blendenanordnung dient zur Zuführung von Luft und weist vier nebeneinander liegende Blendenöffnungen 25 auf. Vor jeder Blendenöffnung 25 liegt ein Ventil 26, über welches Luft der jeweiligen Blendenöffnung 26 zugeführt wird.

Die Durchmesser der Blendenöffnung 25 sind groß im Vergleich zur Dicke des Blendenkörpers 24. In jedem Fall betragen die Durchmesser wenigstens ein Drittel der Dicke des Blendenkörpers. Damit ist die Längsausdehnung der Blendenöffnung 25 erheblich kleiner, aber zumindest nicht wesentlich größer als deren Querschnitt. Dies führt dazu, dass auch bei unterschiedlichen Strömungsgeschwindigkeiten der Luft über den Blendenquerschnitt ein weitgehend konstantes und homogenes Geschwindigkeitsprofil erhalten wird.

Die Blendenöffnungen 25 jeder Blendenanordnung können selektiv über die Steuereinheit 10 geschlossen oder geöffnet werden. Je nachdem welche Blendenöffnungen 25 geschlossen oder geöffnet sind, ergeben sich unterschiedliche Querschnitte der Drossel 8, 9, wobei im vorliegenden Fall fünfzehn unterschiedliche Querschnitte einstellbar sind.

Die Blendenanordnungen zur Ölzufuhr weisen einen Aufbau auf, welcher im Wesentlichen dem Aufbau der Blendenanordnung gemäß Fig. 3 entspricht. Dabei weist die Blendenanordnung zur Ölzufuhr im vorliegenden Fall nur zwei verschiedene Blendenöffnungen 25 auf.

Die Blendenanordnung für die Zusatzluft weist im vorliegenden Fall drei Blendenöffnungen 25 mit unterschiedlichen Querschnitten auf.

Die Steuerung der Vorrichtung 1 zur Aerosolerzeugung erfolgt zentral über die Steuereinheit 10.

Dabei wird je nach Art des an den Aerosolabgang 17 angeschlossenen Werkzeugs 3 für die einzelnen Blendenanordnungen jeweils über die Steuereinheit 10 vorgegeben, welche Blendenöffnungen 25 geschlossen und welche geöffnet sind. Dadurch erfolgt in Abhängigkeit der über den Aerosolabgang 17 aus dem Druckbehälter 4 ausgeführten Aerosolentnahmemenge eine Einstellung der Öl- und Luftvolumenströme, die der Injektorvorrichtung 5 zugeführt werden. Über die Vorgabe dieser Volumenströme erfolgt eine dynamische Druckregelung im Innern des Druckbehälters 4, die insbesondere zu einer Selbststabilisierung der Aerosolerzeugung führt. Insbesondere führen dynamische Querschnittsveränderungen des Aerosolabnahmequerschnitts und damit verbundene Änderungen der Aerosolentnahmemengen zu einer Druckänderung im Innern des Druckbehälters 4, die der jeweiligen Änderung der Entnahmemenge entgegen wirken. Derartige dynamische Prozesse treten insbesondere bei als Bohrern ausgebildeten Werkzeugen 3 auf, die in ein Werkstück eingeführt und dann wieder aus diesem ausgeführt werden.

Auf diese Weise wird eine stabile Aerosolerzeugung erhalten, ohne dass die Einstellung des Drosselsystems während des Betriebs der Vorrichtung 1 geändert werden muss. Insbesondere ist eine stabile Aerosolerzeugung bei zeitlich veränderlichen Aerosolentnahmemengen gewährleistet.

Die Einstellwerte des Drosselsystems sind zweckmäßigerweise als Parameterwerte oder Kennlinien in der Steuereinheit 10 abgespeichert oder werden nach Bedarf in diese eingegeben.

Die im Wesentlichen einzige Voraussetzung für eine stabile Aerosolerzeugung besteht darin, dass der Differenzdruck ΔP = P_{V} - P_{B} oberhalb eines vorgegebenen Grenzwerts ΔP₀ liegt. Bei einem vorgegebenen Versorgungsdruck P_{V} an der Druckluftzufuhr darf dann der Behälterdruck P_{B} im Druckbehälter 4 einen vorgegebenen Grenzwert nicht überschreiten. Der Grenzwert ΔP₀ liegt im Bereich 2 bar ≤ P₀ ≤ 2,5 bar und beträgt vorzugsweise 2,2 bar. Der Differenzdruck wird mittels des Sensors 11 erfasst und als Eingangsgröße der Steuerung der Aerosolerzeugung in die Steuereinheit 10 eingelesen.

Liegt der Differenzdruck oberhalb des Grenzwerts ΔP₀, erfolgt in der Injektorvorrichtung 5 eine kontinuierliche Aerosolerzeugung mit den in der Steuereinheit 10 vorgegebenen Einstellungen der Blendenanordnungen.

Unterschreitet der Differenzdruck ΔP den Grenzwert ΔP₀, wird die Aerosolerzeugung unterbunden. Hierzu werden vorzugsweise sämtliche Blendenanordnungen geschlossen. Der Aerosolabgang 17 bleibt jedoch offen, so dass nach wie vor Aerosol 2 aus dem Druckbehälter 4 gefördert wird, so dass der Behälterdruck P_{B} im Lauf der Zeit abnimmt.

Die Aerosolerzeugung wird erst dann wieder aufgenommen, sobald der Differenzdruck ΔP einen weiteren Grenzwert ΔP₁ überschreitet. Der Grenzwert ΔP₁ liegt oberhalb des Grenzwerts ΔP₀. Vorzugsweise liegt ΔP₁ im Bereich 3 bar ≤ ΔP₁ ≤ 3,5 bar und beträgt besonders vorteilhaft 3,4 bar.

Die Differenz ΔP zwischen den Grenzwerten ΔP₀ und ΔP₁ bildet eine Schalthysterese für die Steuerung der Aerosolerzeugung, durch welche unnötige Schaltvorgänge, das heißt ein Starten und Unterbrechen der Aerosolerzeugung, vermieden werden. Damit wird ein Aufschwingen des Systems verhindert.

Insbesondere bei als Bohrern ausgebildeten Werkzeugen 3 ist es notwendig, dass dem jeweiligen Werkzeug 3 nur in fest vorgegebenen Zeitintervallen Aerosol 2 zugeführt wird.

Beispielsweise ist es zweckmäßig, die Aerosolzuführung auf die Zeitintervalle zu begrenzen, in welchen der Bohrer in ein Werkstück eingeführt wird. Dagegen soll eine Aerosolerzeugung unterbunden werden, wenn das Werkzeug 3 aus dem Werkstück ausgeführt wird, um unnötige Verschmutzungen des Werkzeugs mit Öl zu verhindern.

Hierzu wird über eine externe Steuerung der Kugelhahn betätigt, wodurch die Aerosolförderung zum Werkzeug 3 abrupt aktivierbar und deaktivierbar ist.

## Patentansprüche

1. Vorrichtung (1) zur Aerosolerzeugung mit einer Injektorvorrichtung (5), in welcher aus einem Trägergas und einer Flüssigkeit ein Aerosol (2) erzeugt wird, wobei das Trägergas und die Flüssigkeit der Injektorvorrichtung (5) jeweils über ein Drosselsystem mengengesteuert zugeführt sind, **dadurch gekennzeichnet, dass** das Drosselsystem eine Blendenanordnung mit separat verschließbaren Blendenöffnungen (25) umfasst.

2. Vorrichtung zur Aerosolerzeugung nach Anspruch 1, **dadurch gekennzeichnet, dass** das Drosselsystem wenigstens eine Drossel (8, 9) umfasst.

3. Vorrichtung zur Aerosolerzeugung nach Anspruch 1 oder 2, **dadurch gekennzeichnet, dass** das Trägergas über wenigstens eine Düse (20) und die eine erste Drossel (8) bildende Blendenanordnung und die Flüssigkeit über wenigstens eine weitere Düse (21) und eine weitere Drossel (9) bildende Blendenanordnung der Injektorvorrichtung (5) zugeführt sind.

4. Vorrichtung zur Aerosolerzeugung nach einem der oben genannten Ansprüche, **dadurch gekennzeichnet, dass** zwei Düsensätze mit jeweils einer Düse (20, 21, 22, 23) zur Zuführung von Trägergas und Flüssigkeit vorgesehen sind, wobei jeder Düse (20, 21, 22, 23) eine separate Blendenanordnung zugeordnet ist.

5. Vorrichtung zur Aerosolerzeugung nach Anspruch 4, **dadurch gekennzeichnet, dass** eine Düse (22) mit einer vorgeordneten Blendenanordnung zur Zuführung von Zusatzträgergas vorgesehen ist.

6. Vorrichtung zur Aerosolerzeugung nach einem der Ansprüche 2 bis 5, **dadurch gekennzeichnet, dass** jede Blendenanordnung eine vorgegebene Anzahl (N) von separat verschließbaren Blendenöffnungen (25) aufweist.

7. Vorrichtung zur Aerosolerzeugung nach einem der Ansprüche 2 bis 6, **dadurch gekennzeichnet, dass** die Blendenöffnungen (25) einer Blendenanordnung jeweils verschiedene Durchmesser aufweisen.

8. Vorrichtung zur Aerosolerzeugung nach einem der Ansprüche 2 bis 7, **dadurch gekennzeichnet, dass** der Durchmesser jeder Blendenöffnung (25) einer Blendenanordnung mindestens ein Drittel der Dicke des die Blendenöffnung (25) begrenzenden Blendenkörpers (24) beträgt.

9. Vorrichtung zur Aerosolerzeugung nach einem der Ansprüche 2 bis 8, **dadurch gekennzeichnet, dass** jeder Blendenöffnung (25) einer Blendenanordnung über ein separates Ventil (26) Trägergas oder Flüssigkeit zugeführt ist.

10. Vorrichtung zur Aerosolerzeugung nach einem der oben genannten Ansprüche, **dadurch gekennzeichnet, dass** dem Aerosolabgang (17) ein steuerbares Verschlussmittel (19) zugeordnet ist, durch dessen Betätigung die Förderung von Aerosol (2) über den Aerosolabgang (17) unterbunden ist.

11. Vorrichtung zur Aerosolerzeugung nach Anspruch 10, **dadurch gekennzeichnet, dass** das Verschlussmittel (19) von einem gesteuerten Kugelhahn gebildet ist.

12. Vorrichtung zur Aerosolerzeugung nach einem der oben genannten Ansprüche, **dadurch gekennzeichnet, dass** das Trägergas von Luft gebildet ist, und dass die Flüssigkeit von Öl oder einem synthetischen Ester gebildet ist.

13. Vorrichtung zur Aerosolerzeugung nach einem der oben genannten Ansprüche, **dadurch gekennzeichnet, dass** die Injektorvorrichtung (5) in einem unter einem Behälterdruck (P_{B}) stehenden Druckbehälter (4) angeordnet ist und das Trägergas unter einem Versorgungsdruck (P_{V}) zugeführt ist und dass das Drosselsystem in Abhängigkeit vom Differenzdruck (ΔP=P_{V} - P_{B}) zwischen Behälterdruck und Versorgungsdruck steuerbar ausgestaltet ist.

14. Vorrichtung zur Aerosolerzeugung nach einem der oben genannten Ansprüche, **dadurch gekennzeichnet, dass** das Drosselsystem über eine Steuereinheit (10) gesteuert ist.

15. Vorrichtung zur Aerosolerzeugung nach Anspruch 13, **dadurch gekennzeichnet, dass** ein Sensor (11) zur Bestimmung des Differenzdruckes (ΔP = P_{V} - P_{B}) vorgesehen ist, welcher eine Eingangsgröße für die Steuereinheit (10) bildet.

16. Verfahren zum Erzeugen eines Aerosols (2), bei dem in einer Injektorvorrichtung (5) ein Aerosol aus einem Trägergas und einer Flüssigkeit erzeugt wird, wobei die Menge des in die Injektorvorrichtung (5) zugeführten Trägergases und der in die Injektorvorrichtung (5) zugeführten Flüssigkeit gesteuert wird, **dadurch gekennzeichnet, dass** zur Mengensteuerung eine Mehrzahl von Blendenöffnungen (25) selektiv geöffnet oder geschlossen werden.

17. Verfahren zum Erzeugen eines Aerosols nach Anspruch 16, **dadurch gekennzeichnet, dass** der Volumenstrom des Trägergases und der Flüssigkeit in Abhängigkeit von der Druckdifferenz (ΔP = P_{V} - P_{B}) zwischen einem Versorgungsdruck (P_{V}) des Trägergases und einem Behälterdruck (P_{B}) eines Druckbehälters (4), in dem die Injektorvorrichtung (5) angeordnet ist, gesteuert wird.

18. Verfahren zum Erzeugen eines Aerosols nach Anspruch 16 oder 17, **dadurch gekennzeichnet, dass** über die Steuereinheit (10) Blendenöffnungen (25) einzeln geöffnet oder geschlossen werden.

19. Verfahren zum Erzeugen eines Aerosols nach einem der Ansprüche 16 bis 18, **dadurch gekennzeichnet, dass** die Blendenöffnungen (25) der Blendenanordnungen durch die Steuereinheit (10) geschlossen werden, sobald der Differenzdruck (ΔP) einen ersten vorgegebenen Grenzwert (ΔP₀) unterschreitet.

20. Verfahren zum Erzeugen eines Aerosols nach Anspruch 19, **dadurch gekennzeichnet, dass** der erste Grenzwert (ΔP₀) in einem Bereich zwischen 2 bar und 2,5 bar liegt.

21. Verfahren zum Erzeugen eines Aerosols nach einem der Ansprüche 18 bis 20. **dadurch gekennzeichnet, dass** vorgegebene Blendenöffnungen (25) der Blendenanordnungen durch die Steuereinheit (10) geöffnet werden, sobald der Differenzdruck (ΔP) einen zweiten vorgegebenen Grenzwert (ΔP₁) überschreitet, wobei der zweite vorgegebene Grenzwert (ΔP₁) größer als der erste vorgegebene Grenzwert (ΔP₀) ist.

22. Verfahren zum Erzeugen eines Aerosols nach Anspruch 21, **dadurch gekennzeichnet, dass** der zweite Grenzwert (ΔP₁) in einem Bereich zwischen 3 bar und 3,5 bar liegt.

23. Verfahren zum Erzeugen eines Aerosols nach einem der Ansprüche 16 bis 21, **dadurch gekennzeichnet, dass** die Anzahl der geöffneten Blendenöffnungen (25) der einzelnen Blendenanordnungen bei oberhalb des Grenzwerts (ΔP₀) liegenden Differenzdruck in Abhängigkeit der über wenigstens einen Aerosolabgang (17) aus dem Druckbehälter (4) geförderten Menge des Aerosols (2) über die Steuereinheit (10) vorgegeben wird.

24. Verfahren zum Erzeugen eines Aerosols nach Anspruch 21, **dadurch gekennzeichnet, dass** die Blendenöffnungen (25) der einzelnen Blendenanordnungen in Abhängigkeit von Parameterwerten und/oder Kennlinien geöffnet werden.

25. Verfahren zum Erzeugen eines Aerosols nach Anspruch 24, **dadurch gekennzeichnet, dass** die Parameterwerte und/oder Kennlinien in die Steuereinheit (10) eingegeben und/oder in dieser abgespeichert werden.

26. Verfahren zum Erzeugen eines Aerosols nach einem der Ansprüche 16 bis 25, **dadurch gekennzeichnet, dass** das Aerosol (2) zur Kühlschmierung von Werkzeugen (3), Werkstücken und/oder Maschinenteilen eingesetzt wird.

27. Verfahren zum Erzeugen eines Aerosols nach einem der Ansprüche 16 bis 26, **dadurch gekennzeichnet, dass** der Versorgungsdruck (P_{V}) im Bereich zwischen 6 bar und 10 bar liegt.

## Claims

1. A device (1) for aerosol generation with an injector device (5) in which an aerosol (2) is generated from a carrier gas and a liquid, the carrier gas and the liquid being supplied to the injector device (5) in quantity-controlled manner, in each case via a throttle system, **characterised in that** the throttle system includes an orifice array with separately closeable orifice apertures (25).

2. Device for aerosol generation according to Claim 1, **characterised in that** the throttle system includes at least one throttle (8, 9).

3. Device for aerosol generation according to Claim 1 or 2, **characterised in that** the carrier gas is supplied via at least one nozzle (20) and the orifice array constituting a first throttle (8), and the liquid is supplied via at least one further nozzle (21) and a further orifice array of the injector device (5) constituting a throttle (9).

4. Device for aerosol generation according to one of the foregoing claims, **characterised in that** two nozzle sets with, in each case, a nozzle (20, 21, 22, 23) for supplying carrier gas and liquid are provided, a separate orifice array being assigned to each nozzle (20, 21, 22, 23).

5. Device for aerosol generation according to Claim 4, **characterised in that** a nozzle (22) with an upstream orifice array for supplying additional carrier gas is provided.

6. Device for aerosol generation according to one of Claims 2 to 5, **characterised in that** each orifice array exhibits a predetermined number (N) of separately closeable orifice apertures (25).

7. Device for aerosol generation according to one of Claims 2 to 6, **characterised in that** the orifice apertures (25) of an orifice array each have different diameters.

8. Device for aerosol generation according to one of Claims 2 to 7, **characterised in that** the diameter of each orifice aperture (25) of an orifice array amounts to at least one third of the thickness of the orifice body (24) delimiting the orifice aperture (25).

9. Device for aerosol generation according to one of Claims 2 to 8, **characterised in that** carrier gas or liquid is supplied to each orifice aperture (25) of an orifice array via a separate valve (26).

10. Device for aerosol generation according to one of the foregoing claims, **characterised in that** a controllable closure means (19) is assigned to the aerosol outlet (17), the conveying of aerosol (2) via the aerosol outlet (17) being prevented by actuation of said closure means.

11. Device for aerosol generation according to Claim 10, **characterised in that** the closure means (19) is constituted by a controlled ball valve.

12. Device for aerosol generation according to one of the foregoing claims, **characterised in that** the carrier gas is constituted by air, and **in that** the liquid is constituted by oil or by a synthetic ester.

13. Device for aerosol generation according to one of the foregoing claims, **characterised in that** the injector device (5) is arranged in a pressurised container (4) which is subject to a container pressure (P_{B}) and the carrier gas is supplied under a supply pressure (P_{V}), and **in that** the throttle system is configured to be controllable as a function of the differential pressure (ΔP = P_{B} - P_{V}) between the container pressure and the supply pressure.

14. Device for aerosol generation according to one of the foregoing claims, **characterised in that** the throttle system is controlled via a control unit (10).

15. Device for aerosol generation according to Claim 13, **characterised in that** a sensor (11) for determining the differential pressure (ΔP = P_{B} - P_{V}) is provided which creates an input quantity for the control unit (10).

16. A process for generating an aerosol (2), wherein in an injector device (5) an aerosol is generated from a carrier gas and a liquid, the quantity of the carrier gas supplied into the injector device (5) and of the liquid supplied into the injector device (5) being controlled, **characterised in that** for the purpose of quantity control a plurality of orifice apertures (25) are selectively opened or closed.

17. Process for generating an aerosol according to Claim 16, **characterised in that** the volumetric flow rate of the carrier gas and of the liquid is controlled as a function of the differential pressure (ΔP = P_{B} - P_{V}) between a supply pressure (P_{V}) of the carrier gas and a container pressure (P_{B}) of a pressurised container (4) in which the injector device (5) is arranged.

18. Process for generating an aerosol according to Claim 16 or 17, **characterised in that** orifice apertures (25) are opened or closed individually via the control unit (10).

19. Process for generating an aerosol according to one of Claims 16 to 18, **characterised in that** the orifice apertures (25) of the orifice arrays are closed by the control unit (10) as soon as the differential pressure (ΔP) falls below a first predetermined limiting value (ΔP₀).

20. Process for generating an aerosol according to Claim 19, **characterised in that** the first limiting value (ΔP₀) lies within a range between 2 bar and 2.5 bar.

21. Process for generating an aerosol according to one of Claims 18 to 20, **characterised in that** predetermined orifice apertures (25) of the orifice arrays are opened by the control unit (10) as soon as the differential pressure (ΔP) exceeds a second predetermined limiting value (ΔP₁), the second predetermined limiting value (ΔP₁) being greater than the first predetermined limiting value (ΔP₀).

22. Process for generating an aerosol according to Claim 21, **characterised in that** the second limiting value (ΔP₁) lies within a range between 3 bar and 3.5 bar.

23. Process for generating an aerosol according to one of Claims 16 to 21, **characterised in that** the number of opened orifice apertures (25) of the individual orifice arrays in the case of a differential pressure above the limiting value (ΔP₀) is predetermined by the control unit (10) as a function of the quantity of the aerosol (2) conveyed out of the pressurised container (4) via at least one aerosol outlet (17).

24. Process for generating an aerosol according to Claim 21, **characterised in that** the orifice apertures (25) of the individual orifice arrays are opened as a function of parameter values and/or characteristic curves.

25. Process for generating an aerosol according to Claim 24, **characterised in that** the parameter values and/or characteristic curves are input into the control unit (10) and/or are stored in the latter.

26. Process for generating an aerosol according to one of Claims 16 to 25, **characterised in that** the aerosol (2) is employed for the cooling lubrication of tools (3), workpieces and/or machine parts.

27. Process for generating an aerosol according to one of Claims 16 to 26, **characterised in that** the supply pressure (P_{V}) lies within the range between 6 bar and 10 bar.

## Revendications

1. Dispositif de production d'un aérosol comprenant un dispositif d'injection (5) dans lequel un aérosol est produit à partir d'un gaz porteur, dans lequel le gaz porteur et le liquide sont amenés en débit régulé dans le dispositif d'injection (5) chacun par un système d'étranglement, **caractérisé en ce que** le système d'étranglement comprend un ensemble de diaphragmes à orifice avec des ouvertures de diaphragme à orifice (25) qui peuvent se fermer de manière séparée.

2. Dispositif de production d'un aérosol selon la revendication 1, **caractérisé en ce que** le système d'étranglement comprend au moins un organe d'étranglement (8, 9).

3. Dispositif de production d'un aérosol selon l'une des revendications 1 ou 2, **caractérisé en ce que** le gaz porteur est amené dans le dispositif d'injection (5) par l'intermédiaire d'au moins une buse (20) et d'un premier ensemble de diaphragmes à orifice formant organe d'étranglement (8) et le liquide est amené par l'intermédiaire d'au moins une autre buse (21) et d'un autre ensemble de diaphragmes à orifice formant organe d'étranglement (9).

4. Dispositif de production d'un aérosol selon l'une quelconque des revendications précédentes, **caractérisé en ce que** deux ensembles de buses, comprenant respectivement une buse (20, 21, 22, 23) pour l'injection du gaz porteur et du liquide, sont prévus, chaque buse (20, 21, 22, 23) étant associée à un ensemble de diaphragmes à orifice séparé.

5. Dispositif de production d'un aérosol selon la revendication 4, **caractérisé en ce qu'**une buse (22), avec un ensemble de diaphragmes à orifice monté en amont, est prévue pour l'injection de gaz porteur supplémentaire.

6. Dispositif de production d'un aérosol selon l'une quelconque des revendications 2 à 5, **caractérisé en ce que** chaque ensemble de diaphragmes à orifice présente un nombre (N) prédéfini d'ouvertures de diaphragme à orifice (25) qui peuvent être fermées séparément.

7. Dispositif de production d'un aérosol selon l'une quelconque des revendications 2 à 6, **caractérisé en ce que** les ouvertures de diaphragme à orifice (25) d'un ensemble de diaphragmes à orifice ont chacune un diamètre différent.

8. Dispositif de production d'un aérosol selon l'une quelconque des revendications 2 à 7, **caractérisé en ce que** le diamètre de chaque ouverture de diaphragme à orifice (25) d'un ensemble de diaphragmes est au moins égal à un tiers de l'épaisseur du corps de diaphragme à orifice (24) délimitant l'ouverture de diaphragme à orifice (25).

9. Dispositif de production d'un aérosol selon l'une quelconque des revendications 2 à 8, **caractérisé en ce que** le gaz porteur ou le liquide sont amenés à chaque ouverture de diaphragme à orifice (25) d'un ensemble de diaphragmes à orifice par l'intermédiaire d'une vanne séparée (26).

10. Dispositif de production d'un aérosol selon l'une quelconque des revendications précédentes, **caractérisé en ce qu'**un moyen d'obturation (19) commandable, dont l'actionnement empêche le passage de l'aérosol (2) à travers la sortie d'aérosol (17), est disposé à la sortie d'aérosol (17).

11. Dispositif de production d'un aérosol selon la revendication 10, **caractérisé en ce que** le moyen d'obturation (19) est un robinet à tournant sphérique commandé.

12. Dispositif de production d'un aérosol selon l'une quelconque des revendications précédentes, **caractérisé en ce que** le gaz porteur est constitué d'air et le liquide est constitué d'huile ou d'un ester synthétique.

13. Dispositif de production d'un aérosol selon l'une quelconque des revendications précédentes, **caractérisé en ce que** le dispositif d'injection (5) es disposé dans un réservoir sous pression (4) mis sous une pression de réservoir (P_{B}) et le gaz porteur est amené sous une pression d'injection (Pᵥ) et **en ce que** le système d'étranglement est conçu de manière à pouvoir être commandé en fonction de la différence de pression (ΔP = Pᵥ - P_{B}) entre la pression de réservoir et la pression d'injection.

14. Dispositif de production d'un aérosol selon l'une quelconque des revendications précédentes, **caractérisé en ce que** le système d'étranglement (8, 9) est commandé par une unité de commande (10).

15. Dispositif de production d'un aérosol selon la revendication 13, **caractérisé en ce qu'**un capteur (11) est prévu pour déterminer la différence de pression (ΔP = Pᵥ - P_{B}), laquelle constitue une grandeur d'entrée pour l'unité de commande (10).

16. Procédé de production d'un aérosol, dans lequel un aérosol (2) est produit dans un dispositif d'injection (5) à partir d'un gaz porteur et d'un liquide, dans lequel le débit de gaz porteur amené dans le dispositif d'injection (5) et de liquide amené dans le dispositif d'injection (5) est régulé, **caractérisé en ce qu'**une pluralité d'ouvertures de diaphragme à orifice (25) sont ouvertes ou fermées individuellement pour la régulation du débit.

17. Procédé de production d'un aérosol selon la revendication 16, **caractérisé en ce que** le débit volumique du gaz porteur et du liquide est régulé en fonction de la différence de pression (ΔP = Pᵥ - P_{B}) entre une pression d'injection (Pᵥ) du gaz porteur et une pression de réservoir (P_{B}) d'un réservoir sous pression (4) dans lequel est disposé le dispositif d'injection (5).

18. Procédé de production d'un aérosol selon la revendication 16 ou 17, **caractérisé en ce que** les ouvertures de diaphragme à orifice (25) sont ouvertes ou fermées individuellement par l'intermédiaire de l'unité de commande (10).

19. Procédé de production d'un aérosol selon l'une quelconque des revendications 16 à 18, **caractérisé en ce que** les ouvertures de diaphragme à orifice (25) des ensembles de diaphragmes à orifice sont fermées par l'intermédiaire de l'unité de commande (10) dès que la différence de pression (ΔP) se trouve en dessous d'une première valeur limite prédéfinie (ΔP₀).

20. Procédé de production d'un aérosol selon la revendication 19, **caractérisé en ce que** la première valeur limite (ΔP₀) est comprise entre 2 bars et 2,5 bars.

21. Procédé de production d'un aérosol selon l'une quelconque des revendications 18 à 20, **caractérisé en ce que** des ouvertures de diaphragme à orifice (25) prédéfinies des ensembles de diaphragmes à orifice sont ouvertes par l'intermédiaire de l'unité de commande (10) dès que la différence de pression (ΔP) se trouve au-dessus d'une deuxième valeur limite prédéfinie (ΔP₁), la deuxième valeur limite prédéfinie (ΔP₁) étant supérieure à la première valeur limite prédéfinie (ΔP₀).

22. Procédé de production d'un aérosol selon la revendication 21, **caractérisé en ce que** la deuxième valeur limite (ΔP₁) est comprise entre 3 bars et 3,5 bars.

23. Procédé de production d'un aérosol selon l'une quelconque des revendications 16 à 21, **caractérisé en ce que** le nombre d'ouvertures de diaphragme à orifice (25) ouvertes des ensembles de diaphragmes à orifice individuels est prédéfini par l'unité de commande (10) quand une différence de pression se trouve au-dessus de la première valeur limite (ΔP₀) en fonction de la quantité d'aérosol (2) passant dans au moins une sortie d'aérosol (17) hors du réservoir sous pression (4).

24. Procédé de production d'un aérosol selon la revendication 21, **caractérisé en ce que** les ouvertures de diaphragme à orifice (25) des ensembles de diaphragmes à orifice individuels sont ouvertes en fonction de valeurs de paramètres et/ou de caractéristiques.

25. Procédé de production d'un aérosol selon la revendication 24, **caractérisé en ce que** les valeurs de paramètres et/ou les caractéristiques sont entrées et/ou enregistrées dans l'unité de commande (10).

26. Procédé de production d'un aérosol selo5, **caractérisé en ce que** l'aérosol (2) est mis en oeuvre pour la lubrification à froid d'outils (3), de pièces à usiner et/ou de pièces de machines.

27. Procédé de production d'un aérosol selon l'une quelconque des revendications 16 à 26, **caractérisé en ce que** la pression d'injection (Pᵥ) est comprise entre 6 bars et 10 bars.
